# FASCICULE DE BREVET EUROPEEN

(11) **EP 1 048 417 B1**
(45) Date de publication et mention de la délivrance du brevet: **29.12.2004**
(21) Numéro de dépôt: 00460029.2
(22) Date de dépôt: 13.04.2000
(51) Int. Cl.: B26D 7/01, B26D 7/06, B26D 7/30, B26D 1/06, B26D 7/32

(54) **Trancheur pour produits alimentaires tels que saumon fumé, et procédé de tranchage de saumon fumé**
Schneidemaschine für Lebensmittel, insbesondere für geräucherten Lachs, sowie Verfahren zum Schneiden von geräuchertem Lachs
Slicer for food, in particular for smoked salmon, and method for slicing smoked salmon

(30) Priorité: 19.04.1999 FR 9905063
(43) Date de publication de la demande: 02.11.2000
(73) Titulaire: Irtech S.A., 56520 Guidel (FR)
(72) Inventeur: Sourbes, Jean-Louis, 56520 Guidel (FR); Dubousquet, Michel, 56520 Guidel (FR)
(74) Mandataire: Bentz, Jean-Paul

(56) Documents cités:
- EP-A- 0 549 134
- WO-A-89/03180
- DE-A- 2 646 847
- DE-U- 8 811 439
- FR-A- 613 955
- FR-A- 2 627 423
- GB-A- 525 634
- GB-A- 2 238 711
- US-A- 5 149 554

## Description

La présente invention concerne un trancheur selon le préambule de la revendication 1. Un exemple de trancheur de ce type, considéré comme l'état de la technique le plus proche, se trouve dans le document FR-A-2 627 423.

Pour de tels produits sous forme de tranches conditionnées en lots, la grande distribution est de plus en plus demanderesse de poids constant qui lui permet de les traiter en tant qu'articles à prix unique avec tous les avantages que cela comporte. Et à cette exigence de poids constant, vient s'ajouter une seconde exigence de qualité, consistant en une uniformité maximale des tranches d'un même lot, quant à leur poids unitaire et à leur taille.

L'invention a été réalisée en vue d'apporter des solutions permettant d'atteindre ces objectifs tout en minimisant les pertes de produit ou chutes. Ces objectifs sont atteints par un trancheur ayant les caractéristiques de la revendication 1.

Le trancheur est conçu de telle manière que soient réglables l'épaisseur de tranchage et l'inclinaison du produit à trancher par rapport au plan de coupe, et que ces réglages puissent être suffisamment rapides pour être effectués au besoin pour réaliser chaque tranche, entre deux opérations de tranchage, et à une cadence de tranchage industrielle.

Un trancheur selon l'invention comprend :
- un réceptacle destiné à recevoir les produits à trancher et comprenant une plaque de référence contre laquelle sont maintenus appliqués lesdits produits à trancher ;
- un ensemble de coupe mobile en va-et-vient sous ledit réceptacle, comprenant une première plaque de glissement portant une lame de coupe transversale sur son bord avant, et une seconde plaque d'appui des produits, placée à l'avant de ladite première plaque et dans son prolongement, l'épaisseur de tranchage étant défini par l'écart entre les plans de glissement et d'appui, respectivement desdites première et seconde plaques,
- un moyen pour faire varier ledit écart entre lesdites première et seconde plaques, et
- un moyen pour faire varier l'inclinaison dudit réceptacle par rapport à la direction de déplacement dudit ensemble de coupe,
ces deux moyens étant reliés à un asservissement électronique de telle façon que l'orientation de coupe par rapport au produit à trancher, et l'épaisseur de tranche puissent être modifiées pour chaque cycle de coupe lors de la phase de recul de l'ensemble de coupe.

Selon une autre caractéristique de l'invention, l'écart entre lesdites première et seconde plaques est modifié par déplacement en translation de ladite seconde plaque. Dans une forme de réalisation préférée, celle-ci est portée par des excentriques placés de chaque côté, à l'avant et à l'arrière, qui sont solidarisés en rotation et donc entraînés en rotation par un moyen unique.

Selon une autre caractéristique de l'invention, ledit réceptacle est articulé sur un axe transversal en son extrémité adjacente audit ensemble de coupe, et est entraîné en pivotement en son extrémité opposée par un bras pouvant être déplacé en translation perpendiculairement à la direction de déplacement dudit ensemble de coupe.

Une autre caractéristique importante relative au trancheur selon l'invention concerne la pris en charge des tranches à mesure de leur formation. Selon cette caractéristique, un rouleau faisant partie de l'ensemble de coupe coopère avec un convoyeur d'évacuation des tranches, ledit rouleau étant axé transversalement sous la fente de passage des tranches en formation entre lesdites plaques d'appui et de glissement, et tournant de telle manière que pour chaque cycle, la tranche produite s'enroule sur lui à mesure de sa formation et que lors de la phase de recul de l'ensemble de coupe, ledit rouleau transfère la tranche sur ledit convoyeur à une vitesse nulle par rapport à ce dernier. Dans une forme de réalisation préférée, ledit convoyeur transporte les tranches vers l'avant, et la vitesse périphérique dudit rouleau lors du transfert des tranches sur ledit convoyeur est donc sensiblement égale à la vitesse de recul du chariot, augmentée de la vitesse de défilement dudit convoyeur. Ce système permet un contrôle et un repérage précis et simples du positionnement des tranches sur ledit convoyeur, avec pour conséquence d'ouvrir des possibilités très intéressantes pour la reprise en aval des tranches, s'agissant par exemple d'une mise en lots automatique.

Il est également décrit un procédé de tranchage de filets de poisson, notamment saumon fumé, qui a été conçu en vue d'une mise en oeuvre industrielle et de répondre à des objectifs de poids constant, de régularité dans la forme et la taille des tranches, et de réduction des chutes.

Ce procédé se fonde sur la constatation statistique préalable que pour des filets de poisson tel que saumon fumé, il est possible de définir des catégories en fonction de critères tels que poids, taille, forme, etc., dans chacune desquelles la conformation des différents filets soit suffisamment uniforme pour qu'une séquence de tranchage établie sur un filet type vaille pour l'ensemble de la catégorie. Pour le saumon fumé, il a été vérifié que le critère de discrimination pouvait être valablement le poids, pour des catégories correspondant par exemple à des plages de cinquante grammes, un avantage d'utiliser ce critère étant la facilité de mise en oeuvre d'une simple pesée avant le tranchage.

Ce procédé de tranchage de filets de poisson, notamment saumon fumé, consiste préalablement à définir pour un type de produit déterminé, des catégories sur la base d'un ou plusieurs critères propres à être mesurés dans chacune desquelles la configuration des filets à trancher soit sensiblement identique ; et à définir pour chaque catégorie une séquence de tranchage établie sur un filet type de cette catégorie en vue de la reproduire au moyen d'un trancheur asservi électroniquement, et, pour chaque opération de tranchage d'un filet, il comprend les étapes de mesurer le ou les critères de discrimination pour déterminer la catégorie d'appartenance dudit filet, et de lui appliquer ensuite ladite séquence de tranchage correspondant à ladite catégorie déterminée.

La séquence de tranchage correspondant à chaque catégorie est établie avec la possibilité de faire varier deux paramètres entre chaque coupe de tranches successives, à savoir l'épaisseur de tranche et l'orientation de la coupe dans le filet.

Ce procédé peut encore être modifié en tenant compte de paramètres de correction résultant d'un examen optique (par exemple au moyen d'un moyen à laser, d'une caméra et d'un processeur de vision) de chaque filet à trancher, relatifs à des critères tels que les caractéristiques dimensionnelles et/ou la section orthogonale du filet, dont sont évalués les écarts par rapport au filet type de la catégorie d'appartenance dudit filet à trancher pour en déduire des corrections à apporter à ladite séquence.

Les caractéristiques du dispositif apparaîtront plus clairement dans la description suivante, faite en relation avec les dessins joints, dans lesquels :
La Fig. 1 est une vue schématique de côté d'un trancheur selon l'invention,
La Fig. 2 est une vue schématique de côté représentant schématiquement et partiellement en coupe les éléments essentiels de l'ensemble de coupe du trancheur de la Fig. 1,
La Fig. 3 est une autre vue schématique de côté de l'ensemble de coupe, complémentaire de la Fig. 2 pour en illustrer le fonctionnement, et
La Fig. 4 est le schéma d'une séquence de tranchage d'un filet de poisson réalisable par le trancheur des Figs. 1 à 3.

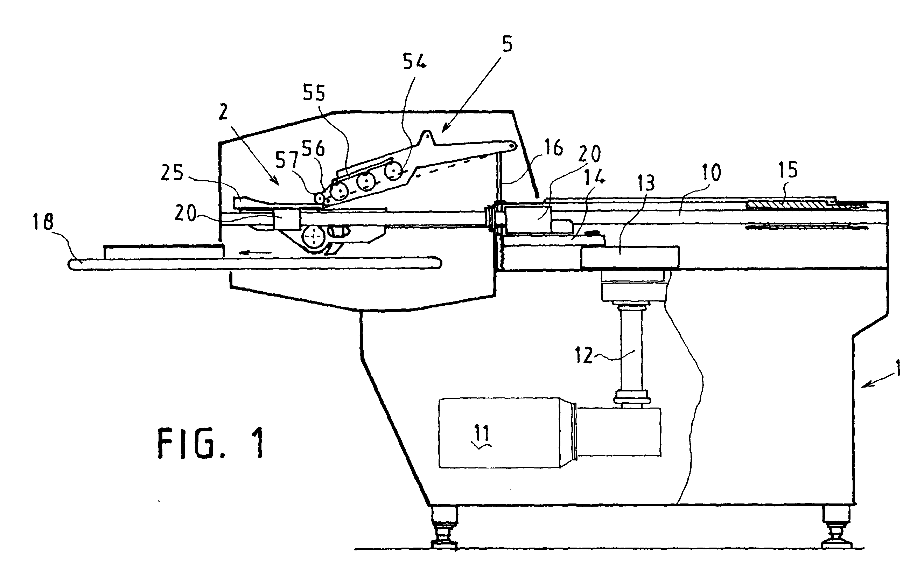

Le trancheur représenté dans sa globalité à la Fig. 1 est d'un type particulièrement adapté pour les filets de poisson tel que saumon fumé. Il comprend un bâti sur pied 1, portant dans sa partie supérieure une voie horizontale de coulissement pour un ensemble de coupe 2. Cette voie de coulissement consiste en deux barres longitudinales 10 disposées de chaque côté, et sur chacune de celles-ci, sont engagés des coulisseaux avant et arrière 20 de l'ensemble de coupe 2.

La partie inférieure du bâti abrite les moyens de déplacement en va-et-vient le long de ladite voie de l'ensemble de coupe 2, s'agissant ici d'un dispositif de bielle manivelle 13, 14 avec un arbre vertical 12 accouplé à un moto-réducteur 11, qui entraîne également en va-et-vient, en opposition avec l'ensemble 2, une masse d'équilibrage 15.

L'ensemble de coupe 2 coopère avec un organe 5 monté sur le bâti. Celui-ci a pour fonction de recevoir les filets à trancher et de les présenter de façon adéquate à l'ensemble de coupe 2. L'organe 5 est un réceptacle de forme allongée, incliné par rapport à l'horizontale.

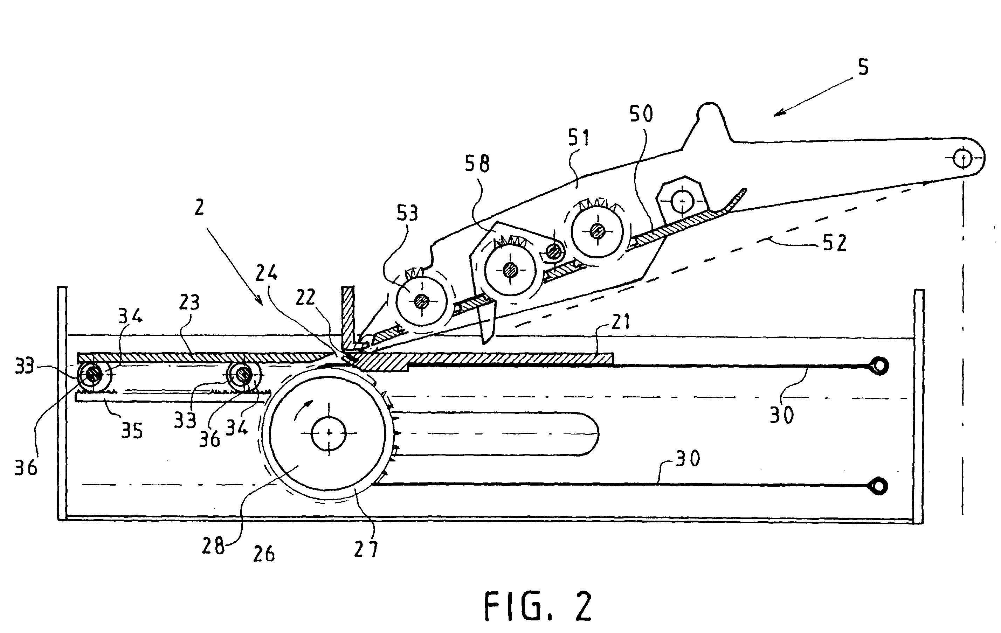

Considérant maintenant la Fig. 2, on y voit clairement que le réceptacle 5 comporte une plaque de dessus 50 qui, fonctionnellement, est fixe par rapport à deux joues latérales 51. Une autre plaque, représentée par la ligne en traits interrompus 52, est montée pivotante contre la force d'un ressort entre les extrémités supérieures des joues 51, et elle a pour fonction d'appliquer les filets contre la plaque de dessus 50 qui constitue un plan de référence. D'autre part le réceptacle 5 est connecté à des éléments du bâti au niveau des extrémités inférieures des joues 51, par des articulations définissant un axe transversal de pivotement permettant de faire varier son inclinaison. La Fig. 1 le représente soutenu en son extrémité supérieure par une barre verticale 16 montée coulissante, dont la partie inférieure forme une crémaillère couplée avec un moyen d'entraînement non montré. Le réceptacle 5 repose simplement par gravité sur le sommet de la barre 16.

Tel que représenté, le réceptacle 5 comporte en outre des moyens pour faire avancer pas à pas les produits vers l'ensemble de coupe 2 à mesure de leur tranchage. Ces moyens sont des alignements transversaux de roues dentées 53 venant inférieurement en débordement de la plaque de référence 50, à travers des fentes de passage ménagées dans celle-ci. Chaque alignement transversal de roues 53 forme, par l'intermédiaire d'un axe commun, un ensemble solidaire en rotation, comportant à l'extérieur d'une des joues 51 une roue à rochet de type roue libre 54, Fig. 1. Les couronnes extérieures de l'ensemble des roues libres 54 sont solidarisées en rotation au moyen d'une biellette 55, laquelle est entraînée en va-et-vient par un levier oscillant 56, lui-même entraîné à son tour par un galet d'extrémité 57 appliqué par ressort sur une piste formant came 25 portée par l'ensemble de coupe 2 : à la fin de la phase de recul de chaque cycle de l'ensemble de coupe 2, les roues dentées 53 sont ainsi entraînées d'un pas en faisant avancer d'autant le filet vers l'ensemble de coupe 2. On voit sur le dessin que le réceptacle 5 comporte de plus un alignement transversal de doigts pivotants 58, escamotables au-dessus de la plaque 50 contre la force d'un ressort, et qui ont pour fonction de sortir vers le bas à travers la plaque 50 derrière la partie terminale des filets, pour retenir celle-ci lorsque devenue trop petite, elle n'est plus tenue dans le réceptacle par la plaque 52.
Outre le réceptacle 5, la Fig. 2 représente les éléments essentiels de l'ensemble de coupe 2, montés sur un chariot qui avance et recule en va-et-vient sous la partie inférieure du réceptacle 5, le déplacement vers l'avant correspondant à la phase de coupe. Sur ledit chariot, sont montées de l'arrière vers l'avant une première plaque de glissement horizontale 21 dans le bord avant de laquelle est fixée une lame de coupe transversale 22, et une seconde plaque horizontale d'appui 23, les deux plaques 21 et 23 recevant alternativement en glissement la base des produits où sont formées les tranches. Les deux plaques 21 et 23 sont légèrement décalées verticalement, l'écart de niveau définissant l'épaisseur de tranchage, et elle sont d'autre part écartées l'une de l'autre longitudinalement, de manière à définir au niveau du tranchant de la lame 22, une fente 24 pour le passage vers le bas des tranches à mesure qu'elle sont formées.

Sous la fente 24, les tranches sont reprises sur un rouleau 26 axé transversalement, également monté sur le chariot, et qui a pour fonction de les transférer sur un convoyeur d'évacuation 18, Fig. 1, où elles sont transportées vers l'avant, comme indiqué par la flèche sur le dessin.

Le rouleau 26 comporte une pluralité de couronnes dentées 27, disposées autour d'un tambour central 28. Le tambour 28 est solidaire en rotation de deux roues à rochet ou roues libres, non visibles sur les dessins, qui sont motrices en sens inverses, et dont les couronnes périphériques sont entraînées en rotation directement à partir du mouvement de va-et-vient du chariot. A cet effet, lesdites couronnes périphériques comportent des réas permettant l'enroulement de câblettes d'entraînement 30, chacune fixée par une extrémité en un point du bâti et par l'autre extrémité dans le réa qui lui est affecté. Chaque roue libre est pourvue de deux câblettes tendues de part et d'autre, la première faisant tourner le rouleau 26 et assurant le réenroulement de la seconde lorsque le chariot se déplace dans un sens, et la seconde assurant le réenroulement de la première lorsque le chariot se déplace dans l'autre sens.

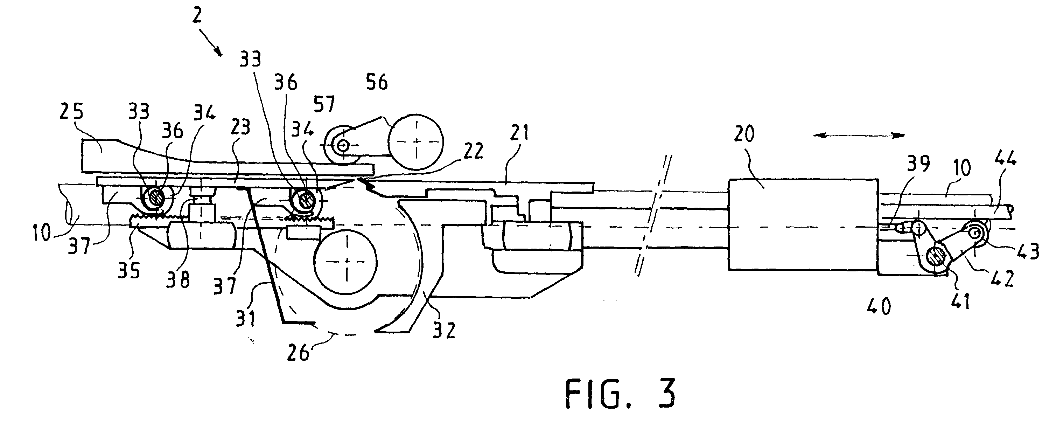

Le rouleau 26 est ainsi entraîné à tourner dans le même sens, indiqué par la flèche sur le dessin, lors des déplacement en avant et en arrière du chariot, le rapport entre sa vitesse de rotation et celle du chariot variant cependant de par une différence de diamètre entre les deux roues libres : lors de la phase de coupe ou avancée du chariot, la vitesse périphérique des couronnes dentées est sensiblement égale à celle du chariot pour que la tranche en cours de formation s'applique correctement sur le rouleau 26 ; lors de la phase de recul, la vitesse périphérique des couronnes dentées 27 augmente pour devenir sensiblement égale à la vitesse du chariot augmentée de la vitesse de défilement du convoyeur 18, afin d'y assurer un transfert parfaitement maîtrisé des tranches du fait qu'elles sont déposées à vitesse nulle sur ledit convoyeur. A la Fig. 3, sont représentés un peigne 31 engagé à la base du rouleau 26 entre ses couronnes dentées 27 pour assurer la libération des tranches lors de leur transfert sur le convoyeur 18, et de l'autre côté, c'est-à-dire en amont relativement au sens de rotation, un talon 32 épousant la périphérie du rouleau 26 pour éviter la libération anticipée des tranches.

La Fig. 3 illustre plus spécialement un système de déplacement en translation verticale de la plaque d'appui 23 permettant de modifier entre chaque coupe l'épaisseur de tranchage. Dans ce système, la plaque 23 est portée sur le bord périphérique de quatre pions 33, soit un pion avant et un pion arrière de chaque côté, chaque pion 33 constituant de façon identique un excentrique sur le côté d'une roue dentée 34 dont il est solidaire, cette dernière étant montée sur un axe fixe du bâti. Les deux roues 34 de chaque côté sont engrenées dans une même crémaillère 35 coulissant longitudinalement, les deux crémaillères 35 étant identiques et déplacées par un moyen d'entraînement commun. De préférence, les deux roues 34 à l'avant, et de même les deux roues 34 à l'arrière, sont solidarisées en rotation par un axe transversal 36. Les pions excentriques 33 ont ici une forme circulaire, et la plaque 23 est montée sur ceux-ci par l'intermédiaire de crochets 37 qui les reçoivent pratiquement sans jeu. Un doigt monté sur ressort 38 assure le verrouillage en place de la plaque 23.

Les deux crémaillères 35 sont connectées, par l'intermédiaire de deux tiges longitudinales de liaison rigides 39, à deux bras pivotants identiques 40, lesquels sont solidarisés par l'intermédiaire d'un axe transversal 41. En position intermédiaire entre les deux bras 40, et également solidarisés avec eux sur l'axe 41, se trouve un bras d'entraînement 42 portant en extrémité un galet 43 appliqué par ressort sous une barre horizontale 44 placée longitudinalement entre les barres de coulissement 10 de l'ensemble de coupe : les crémaillères 35 sont donc déplacées sous l'effet d'un mouvement en translation verticale de la barre 44, pendant le recul du chariot de l'ensemble de coupe 2. La barre 44 a une section circulaire, et elle présente à ses deux extrémités deux roues dentées identiques dont elle est solidaire, lesquelles roues dentées sont engrenées dans deux crémaillères verticales identiques fixées dans le bâti 1. Par conséquent, lorsque la barre 44 se déplace verticalement, le maintien de son horizontalité est parfaitement assuré puisqu'elle tourne alors sur elle-même ensemble avec ses roues dentées d'extrémité qui montent ou descendent identiquement le long de leur crémaillère respective. Ce montage permet de prévoir l'entraînement de la barre 44 en un point quelconque de sa longueur, avantageusement près de son extrémité arrière. Elle est par exemple connectée, avec conservation de son aptitude à tourner sur elle-même, à un bras vertical, non montré, lequel est coulissant et entraîné en montée-descente par un moto-réducteur.

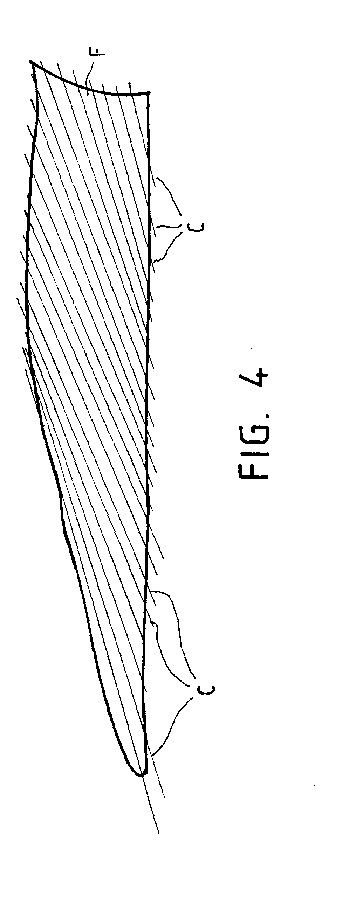

Le trancheur, au moyen d'un asservissement électronique, est apte à effectuer une séquence de tranchage programmée telle que schématisée à la Fig. 4 où l'on voit que l'orientation des plans de coupe C par rapport au filet F, ainsi que l'épaisseur de tranchage, peut varier pour chaque cycle de coupe. Les deux déplacements correspondants, du réceptacle 5 en inclinaison, et de la plaque 23 en translation verticale ont lieu en temps masqué, pendant la phase de recul de l'ensemble de coupe et n'affectent donc en rien la cadence du trancheur. Il a pu être vérifié par des essais, que celle-ci pourrait atteindre le niveau escompté d'au moins 200 tranches/minute.

## Revendications

1. Trancheur pour produits alimentaires tels que filets de saumon fumé ayant
- un réceptacle (5) destiné à recevoir les produits à trancher et comprenant une plaque de référence (50) contre laquelle sont maintenus appliqués lesdits produits à trancher et un moyen pour faire varier l'inclinaison dudit réceptacle (5) par rapport à la direction de déplacement d'un ensemble de coupe (2), **caractérisé en ce qu'**il comprend :
- L'ensemble de coupe (2) mobile en va-et-vient sous ledit réceptacle (5), et comprenant une première plaque de glissement (21) portant une lame de coupe transversale (22) sur son bord avant, et une seconde plaque d'appui (23) des produits, placée à l'avant de ladite première plaque (21) et dans son prolongement, l'épaisseur de tranchage étant défini par l'écart entre les plans de glissement et d'appui, respectivement desdites première et seconde plaques (21, 23), et
- un moyen pour faire varier ledit écart entre lesdites première et seconde plaques (21, 23),
ces deux moyens étant reliés à un asservissement électronique de telle façon que l'orientation de coupe par rapport au produit à trancher, et l'épaisseur de tranche puissent être modifiées pour chaque cycle de coupe lors de la phase de recul de l'ensemble de coupe (2).

2. Trancheur selon la revendication 1, **caractérisé en ce que** l'écart entre lesdites première et seconde plaques (21, 23) est modifié par déplacement en translation de ladite seconde plaque (23).

3. Trancheur selon la revendication 2, **caractérisé en ce que** ladite seconde plaque (23) est portée par des excentriques (33) placés de chaque côté, à l'avant et à l'arrière, qui sont solidarisés en rotation et donc entraînés en rotation par un moyen unique.

4. Trancheur selon la revendication 1 ou 2, **caractérisé en ce que** ledit réceptacle (5) est articulé sur un axe transversal en son extrémité adjacente audit ensemble de coupe (2), et est entraîné en pivotement en son extrémité opposée par un bras (16) pouvant être déplacé en translation perpendiculairement à la direction de déplacement dudit ensemble de coupe (2).

5. Trancheur selon l'une des revendications 1 à 4, **caractérisé en ce que** ledit réceptacle (5) comporte des moyens (53) pour faire avancer pas à pas les produits vers l'ensemble de coupe à mesure de leur tranchage.

6. Trancheur selon l'une des revendications 1 à 5, **caractérisé en ce qu'**il comprend des moyens de prise en charge des tranches à mesure de leur formation, ces moyens consistant en un rouleau (26) dans l'ensemble de coupe (2), disposé sous la fente (24) de passage des tranches entre lesdites plaques d'appui et de glissement (21, 23), qui coopère avec un convoyeur d'évacuation de tranches (18), ledit rouleau (26) tournant de telle manière que pour chaque cycle, la tranche s'enroule sur lui à mesure de sa formation, et soit déposée à vitesse nulle sur ledit convoyeur (18) lors de la phase de recul dudit ensemble de coupe (2).

## Claims

1. Slicer for food products such as smoked salmon fillets, having
- a receptacle (5) intended to receive the products to be sliced and comprising a reference plate (50) against which the said products to be sliced are kept pressed, and a means for varying the inclination of the said receptacle (5) with respect to the direction of displacement of a cutting assembly (2), **characterized in that** it comprises:
- the cutting assembly (2), which is able to move back and forth under the said receptacle (5) and comprises a first sliding plate (21) bearing a transverse cutting blade (22) on its front edge, and a second plate (23) for supporting the products that is placed in front of the said first plate (21) and in its extension, the slicing thickness being defined by the gap between the sliding and supporting planes of the said first and second plates (21, 23), respectively, and
- a means for varying the said gap between the said first and second plates (21, 23),
these two means being connected to an electronic controller such that the cutting orientation with respect to the product to be sliced and the slice thickness may be modified for each cutting cycle during the retreat phase of the cutting assembly (2).

2. Slicer according to Claim 1, **characterized in that** the gap between the said first and second plates (21, 23) is modified by translational displacement of the said second plate (23).

3. Slicer according to Claim 2, **characterized in that** the said second plate (23) is borne by eccentrics (33) placed on each side, at the front and at the rear, that are secured together in terms of rotation, and therefore driven in rotation by a single means.

4. Slicer according to Claim 1 or 2, **characterized in that** the said receptacle (5) is articulated on a transverse axle at its end adjacent to the said cutting assembly (2), and is pivoted at its opposite end by an arm (16) that can be displaced in translation perpendicular to the direction of displacement of the said cutting assembly (2).

5. Slicer according to one of Claims 1 to 4, **characterized in that** the said receptacle (5) has means (53) for advancing the products, step by step, towards the cutting assembly as they are being sliced.

6. Slicer according to one of Claims 1 to 5, **characterized in that** it comprises means for taking hold of the slices as they are being formed, these means consisting of a roller (26) in the cutting assembly (2), arranged under the slot (24) for the passage of the slices between the said supporting and sliding plates (21, 23), that collaborates with a conveyor (18) for discharging the slices, the said roller (26) rotating in such a way that, for each cycle, the slice rolls over it as it is being formed and is deposited at zero velocity onto the said conveyor (18) during the retreat phase of the said cutting assembly (2).

## Patentansprüche

1. Schneidvorrichtung für Lebensmittel, insbesondere Räucherlachsfilet, mit
- einem Aufnehmer (5) zum Aufnehmen der zu schneidenden Produkte, welcher eine Referenzplatte (50) aufweist, gegen welche die zu schneidenden Produkte angedrückt gehalten sind und einem Mittel zum Variieren der Neigung des Aufnehmers (5) in Bezug auf die Verschiebungsrichtung einer Schneidanordnung (2),
**dadurch gekennzeichnet, dass** sie umfasst:
- die Schneidanordnung (2) ist unter dem Aufnehmer (5) hin und her bewegbar und umfasst eine erste Gleitplatte (21), welche eine transversale Schneidklinge (22) auf ihrem Vorderrand trägt, und eine zweite Produkt-Anlegeplatte (23), die vor der ersten Platte (21) und in ihrer Verlängerung platziert ist, wobei die Schnittstärke durch den Abstand zwischen der Gleit- bzw. Anlegeebene der ersten und zweiten Platten (21, 23) definiert ist, und
- ein Mittel zum Variieren des Abstands zwischen den ersten und zweiten Platten (21, 23),
wobei diese beiden Mittel mit einer elektronischen Regelung verbunden sind, derart, dass die Schnittrichtung in Bezug auf das zu schneidende Produkt und die Schnittstärke für jeden Schnittzyklus während der Phase des Rücklaufs der Schneidanordnung (2) geändert werden können.

2. Schneidvorrichtung nach Anspruch 1, **dadurch gekennzeichnet, dass** der Abstand zwischen den ersten und zweiten Platten (21, 23) durch eine Translationsverschiebung der zweiten Platte (23) geändert wird.

3. Schneidvorrichtung nach Anspruch 2, **dadurch gekennzeichnet, dass** die zweite Platte (23) von Exzentern (33) getragen ist, die auf beiden Seiten, vorne und hinten, platziert sind, welche in ihrer Drehung gekoppelt sind und somit durch ein einziges Mittel in Drehung versetzt werden.

4. Schneidvorrichtung nach Anspruch 1 oder 2, **dadurch gekennzeichnet, dass** der Aufnehmer (5) auf einer Transversalachse an seinem der Schneidanordnung (2) angrenzenden Ende angelenkt ist, und an seinem entgegengesetzten Ende durch einen Arm (16) verschwenkt wird, welcher senkrecht zur Verschiebungsrichtung der Schneidanordnung (2) verschoben werden kann.

5. Schneidvorrichtung nach einem der Ansprüche 1 bis 4, **dadurch gekennzeichnet, dass** der Aufnehmer (5) Mittel (53) zum schrittweisen Vorbringen der Produkte entsprechend ihres Schnitts zur Schneidanordnung umfasst.

6. Schneidvorrichtung nach einem der Ansprüche 1 bis 5, **dadurch gekennzeichnet, dass** sie Mittel zum Belasten der Scheiben entsprechend ihrer Bildung umfasst, wobei diese Mittel aus einer Rolle (26) in der Schneidanordnung (2) bestehen, welche unter dem Schlitz (24) für den Durchtritt der Scheiben zwischen den Anlege- und Gleitplatten (21, 23) angeordnet ist, welche mit einem Fördermittel zum Ausbringen der Scheiben (18) zusammenwirkt, wobei sich die Rolle (26) so dreht, dass sich die Scheibe für jeden Zyklus entsprechend ihrer Bildung auf diese wickelt, und während der Phase des Rücklaufs der Schneidanordnung (2) auf das Fördermittel (18) mit Geschwindigkeit Null abgelegt wird.
